# EUROPÄISCHE PATENTSCHRIFT

(11) **EP 3 921 565 B1**
(45) Veröffentlichungstag und Bekanntmachung des Hinweises auf die Patenterteilung: **19.03.2025**
(21) Anmeldenummer: 20702078.5
(22) Anmeldetag: 17.01.2020
(51) Int. Cl.: F16L 21/00, F16L 21/02, F16L 21/035, F16L 27/113, H01M 10/613, H01M 10/625

(54) **STECKSTÜCK UND VERWENDUNG DES STECKSTÜCKS**
PLUG-IN PIECE AND USE OF THE PLUG-IN PIECE
ÉLÉMENT ENFICHABLE ET UTILISATION DE L'ÉLÉMENT ENFICHABLE

(30) Priorität: 06.02.2019 DE 102019102934
(43) Veröffentlichungstag der Anmeldung: 15.12.2021
(73) Patentinhaber: Carl Freudenberg KG, 69469 Weinheim (DE)
(72) Erfinder: HELDMANN, Ralf, 69483 Wald-Michelbach (DE); CLEMENS, Markus, 64385 Reichelsheim (DE); SAUER, Joachim, 64853 Otzberg (DE); ZIEGLER, Günter, 68259 Mannheim (DE)
(86) Internationale Anmeldenummer: PCT/EP2020/051090
(87) Internationale Veröffentlichungsnummer: WO 2020/160888

(56) Entgegenhaltungen:
- EP-A1- 0 780 619
- EP-A1- 2 325 937
- EP-A2- 2 113 703
- DE-T5- 112014 001 073
- US-A1- 2015 192 206

## Beschreibung

Die Erfindung betrifft ein Steckstück, umfassend ein hülsenförmiges Trägerteil aus einem zähharten Werkstoff, das in axialer Richtung an einer ersten Stirnseite einen ersten Dichtwulst und an einer zweiten Stirnseite einen zweiten Dichtwulst aufweist, wobei der erste Dichtwulst und der zweite Dichtwulst aus gummielastischem Werkstoff ausgebildet sind.

Steckstücke dienen der Verbindung von medienführenden Aggregaten, beispielsweise von Komponenten der Kühleinrichtung einer Verbrennungskraftmaschine oder der Batteriekühlung von Akkumulatoren. Ein derartiges Steckstück ist beispielsweise aus der EP 1 024 322 B1 bekannt.

Das vorbekannte Steckstück umfasst ein hülsenförmiges Trägerteil, welches außenumfangsseitig mit einer Beschichtung aus gummielastischem Werkstoff versehen ist, wobei an den beiden Stirnseiten des Trägerteils radial nach außen weisende Dichtwulste angeordnet sind. Zum Verbinden der medienführenden Aggregate wird das Steckstück in Öffnungen eingesteckt, welche in benachbarten und miteinander zu verbindenden Aggregaten eingebracht sind. Dabei legen sich die Dichtwulste an die Innenwand der miteinander zu verbindenden Aggregate dichtend an.

Je nach Ausgestaltung der Dichtwulste ist es dabei möglich, dass eine dichtende Verbindung auch solcher Aggregate möglich ist, deren Öffnungen zueinander einen Achsversatz aufweisen. Der überbrückbare Achsversatz ist dabei aber aufgrund der begrenzten maximalen radialen Erstreckung der Dichtwulste limitiert.

Die US 2015/192206 A1 zeigt eine Dichtung zur Abdichtung zwischen einem ersten und einem zweiten Element, mit einem ersten und einem zweiten ringförmigen Einsatz, wobei der erste und der zweite ringförmige Einsatz axial voneinander beabstandet sind. Der erste und der zweite ringförmige Einsatz sind teilweise von einem Elastomerkörper umgeben.

Der Erfindung liegt die Aufgabe zugrunde, ein Steckstück bereitzustellen, welches eine verbesserte Abdichtung bei einem größeren Achsversatz der Öffnungen der miteinander zu verbindenden Aggregate aufweist.

Diese Aufgabe wird mit den Merkmalen von Anspruch 1 gelöst. Auf vorteilhafte Ausgestaltungen nehmen die Unteransprüche Bezug.

Das erfindungsgemäße Steckstück umfasst ein hülsenförmiges Trägerteil aus einem zähharten Werkstoff, das in axialer Richtung an einer ersten Stirnseite einen ersten Dichtwulst und an einer zweiten Stirnseite einen zweiten Dichtwulst aufweist, wobei der erste Dichtwulst und der zweite Dichtwulst aus gummielastischem Werkstoff ausgebildet sind, wobei das Trägerteil zweiteilig ausgebildet ist und ein erstes Teilträgerteil und ein zweites Teilträgerteil umfasst, die jeweils hülsenförmig ausgebildet und mit axialem Abstand benachbart zueinander angeordnet sind, wobei das erste Teilträgerteil mit dem ersten Dichtwulst und das zweite Teilträgerteil mit dem zweiten Dichtwulst verbunden ist und wobei in dem durch den axialen Abstand von erstem Teilträgerteil und zweitem Teilträgerteil gebildeten Spalt ein gummielastisches Zwischenstück angeordnet ist, das die beiden Teilträgerteile elastisch nachgiebig miteinander verbindet.

Dadurch, dass das Trägerteil zwei mit axialem Abstand zueinander benachbart angeordnete Teilträgerteile aufweist, ist das Steckstück insgesamt flexibel und nachgiebig ausgebildet, wobei sich die beiden Teilträgerteile relativ zueinander in axialer Richtung und in radialer Richtung verlagern können sowie darüber hinaus kippbeweglich zueinander angeordnet sind. Dadurch kann das Steckstück Aggregate miteinander verbinden, deren Öffnungen einen größeren Achsversatz oder auch einen Winkelversatz zueinander aufweisen.

Das erste Teilträgerteil und das zweite Teilträgerteil können als Gleichteile ausgebildet sein. Dies ermöglicht eine einfache und kostengünstige Herstellbarkeit der Teilträgerteile und des Steckstücks. Einerseits reduzieren sich die Kosten für die Bereitstellung eines Werkzeugs zur Herstellung der Teilträgerteile. Des Weiteren ist die Gefahr von Montagefehlern minimiert, da die beiden Teilträgerteile identisch sind.

Derartig ausgebildete Teilträgerteile sind besonders einfach und kostengünstig im Spritzguss herstellbar. Vorzugsweise sind dabei die Teilträgerteile aus einem zähharten Kunststoff wie Polyamid ausgebildet. Die Teilträgerteile können alternativ aber auch aus metallischem Werkstoff ausgebildet sein.

Das erste Teilträgerteil und das zweite Teilträgerteil können zu einer gedachten Radialebene in axialer Richtung mittig des jeweiligen Teilträgerteils symmetrisch ausgebildet sein. Bei dieser Ausgestaltung sind die beiden Teilträgerteile in Bezug auf die mittig verlaufende Radialebene symmetrisch ausgebildet und insofern spiegelsymmetrisch. Diese Ausgestaltung vereinfacht die Herstellbarkeit des Steckstücks, da es nicht erforderlich ist, die Teilträgerteile in einer vorgegebenen Ausrichtung in das Werkzeug zur Herstellung des Steckstücks anzuordnen. Ein weiterer Vorteil ist die höhere mechanische Belastbarkeit der Teilträgerteile in Radialrichtung.

Erfindungsgemäß weisen das erste Teilträgerteil und das zweite Teilträgerteil auf ihren einander axial zugewandten Stirnseiten jeweils einen sich in radialer Richtung nach außen erstreckenden Bund mit einer radialen Höhe auf. Im Vergleich zu einem zylindrisch ausgebildeten Teilträgerteil ergibt sich durch den radial nach außen erstreckenden Bund eine große Anbindefläche für das gummielastische Zwischenstück. Daraus ergeben sich gute Gebrauchseigenschaften während einer langen Gebrauchsdauer.

Das erste Teilträgerteil und das zweite Teilträgerteil können auf ihren einander axial abgewandten Stirnseiten jeweils eine in Umfangsrichtung umlaufende, nutförmige Vertiefung aufweisen, die vom Werkstoff der entsprechenden Dichtwulste ausgefüllt und vom jeweiligen Dichtwulst umschlossen sind. Dadurch können die Dichtwulste formschlüssig in den Teilträgerteilen angeordnet sein, so dass sich eine besonders hohe mechanische Belastbarkeit des Steckstücks ergibt.

Der erste Dichtwulst und der zweite Dichtwulst können einstückig ineinander übergehend und materialeinheitlich ausgebildet sein. Bei dieser Ausgestaltung können der erste Dichtwulst und der zweite Dichtwulst in einem Zug einfach und kostengünstig hergestellt werden.

Der erste Dichtwulst und/oder der zweite Dichtwulst und das Zwischenstück können einstückig ineinander übergehen und materialeinheitlich ausgebildet sein. Bei dieser Ausgestaltung können sowohl die beiden Dichtwulste als auch das Zwischenstück in einem Zug hergestellt werden. Dies erfolgt vorzugsweise im Spritzgussverfahren.

Die Teilträgerteile und das Zwischenstück können innenumfangsseitig von einer Schutzschicht gemeinsam und bindenahtfrei überdeckt sein. Die Schutzschicht bildet eine Barriere und verhindert, dass aggressives, das Steckstück durchströmende Medium die Teilträgerteile angreift. Des Weiteren gewährleistet die Schutzschicht eine sichere Abdichtung des durch das Steckstück hindurchzuleitenden Mediums. Vorzugsweise erstreckt sich dabei die Schutzschicht innenumfangsseitig über die gesamte axiale Länge des Steckstücks und bildet die Innenwandung des Steckstücks.

Die Schutzschicht, der erste Dichtwulst, der zweite Dichtwulst und das Zwischenstück können einstückig ineinander übergehend und materialeinheitlich ausgebildet sein. Dies ermöglicht eine besonders kostengünstige Herstellung des Steckstücks. Dadurch, dass die beiden Dichtwulste, das Zwischenstück und die Schutzschicht einstückig sind, ergibt sich eine hohe Dichtigkeit des Steckstückes. Des Weiteren sind die Teilträgerstücke mechanisch sicher in das Material von Schutzschicht, Dichtwulsten und Zwischenstück eingebettet.

Erfindungsgemäß überdeckt das Zwischenstück den jeweiligen Bund der Teilträgerteile in radialer Richtung vollständig und umfasst eine im Wesentlichen U-förmig ausgebildete Einschnürung, die radial nach außen offen ist. Bei dieser Ausgestaltung ergibt sich eine hohe Elastizität des Steckstücks im Bereich des Zwischenstücks, was einen besonders großen Achsversatz der beiden miteinander zu verbindenden Aggregate ermöglicht, in welche das Steckstück eingesteckt wird. Darüber hinaus ermöglicht die Einschnürung auch einen Ausgleich in Bezug auf einen variablen axialen Abstand der beiden zu verbindenden Aggregate. Im Bereich der Einschnürung kann das Steckstück derart gestaucht werden, dass sich der Abstand der beiden Stirnseiten und der beiden Dichtwulste verringert.

Erfindungsgemäß ist in der Einschnürung ein Stützring angeordnet. Werden Medien unter einem hohen Druck durch das Steckstück transportiert, kann sich das Steckstück im Bereich des Zwischenstücks aufgrund der verhältnismäßig geringen Wanddicke verformen und nach außen ausbeulen. Ist der Innendruck zu hoch, kann es zu einer Beschädigung des Steckstücks in diesem Bereich kommen. In diesem Fall kann außenumfangsseitig ein Stützring vorgesehen sein, welcher in der U-förmig ausgebildeten Einschnürung angeordnet ist. Der Stützring wirkt dem Innendruck entgegen und verhindert eine zu starke Verformung des Steckstücks im Bereich des Zwischenstücks.

In diesem Zusammenhang ist es vorteilhaft, wenn der Stützring, bezogen auf das Zwischenstück vorzugsweise separat hergestellt und ungebunden in der Einschnürung angeordnet ist. In Abhängigkeit des auftretenden Innendrucks kann dabei ein passender Stützring gewählt werden. Gemäß einer vorteilhaften Ausgestaltung kann der Stützring beispielsweise ein separat ausgebildeter O-Ring aus gummielastischem Werkstoff sein, welcher wahlweise in die Einschnürung eingelegt wird. Alternativ können auch Kunststoffringe, Ringwendelfedern oder dergleichen in der Einschnürung angeordnet werden.

Die Einschnürung kann eine radiale Tiefe aufweisen, die der radialen Höhe des jeweils axial angrenzenden Bundes entspricht. Eine derartig ausgebildete Einschnürung ermöglicht eine besonders hohe Elastizität des Steckstücks und den Ausgleich eines besonders großen Achsversatzes bei gleichzeitig ausreichender mechanischer Stabilität.

Das erfindungsgemäße Steckstück eignet sich insbesondre zur Verwendung in einer Medienführung einer Batteriekühlung eines zumindest teilweise elektrisch angetriebenen Kraftfahrzeuges. Bei elektrisch angetriebenen Kraftfahrzeugen ist es zumeist erforderlich, die für den Elektroantrieb erforderlichen Akkumulatoren zu kühlen, da sich diese sowohl im Fahrbetrieb als auch während des Ladevorgangs erhitzen können. Dazu sind die Akkumulatoren mit einer Kühleinrichtung versehen, welche Aggregate und Medienleitungen umfasst, die von einem Kühlmittel durchströmt sind. Zur einfachen und schnellen Anbindung einander angrenzender Aggregate kann dabei das erfindungsgemäße Steckstück vorteilhaft eingesetzt werden. Das Steckstück ermöglicht eine schnelle Montage der aneinander angrenzenden Aggregate, wobei aufgrund der vorteilhaften Ausgestaltung des Steckstücks ein großer Achsversatz der einander zu verbindenden Aggregate zulässig ist.

Ein Ausführungsbeispiel des erfindungsgemäßen Steckstücks wird nachfolgend anhand der Figuren näher erläutert. Diese zeigen, jeweils schematisch:
Fig. 1 ein Steckstück im Schnitt;
Fig. 2 das Steckstück montiert in einer Kühleinrichtung im Schnitt;
Fig. 3 das Steckstück gemäß Figur 1 mit erfindungsgemäßem Stützring in räumlicher Darstellung.

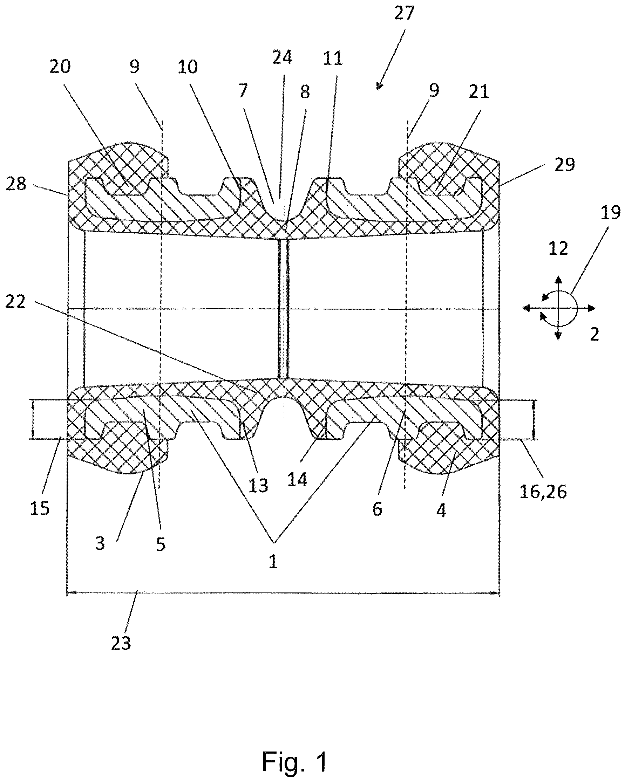

Figur 1 zeigt ein Steckstück 27, umfassend ein hülsenförmiges Trägerteil 1 aus einem zähharten Werkstoff. Das Trägerteil 1 weist in axialer Richtung 2 an einer ersten Stirnseite 28 einen ersten Dichtwulst 3 und an einer zweiten Stirnseite 29 einen zweiten Dichtwulst 4 auf. Der erste Dichtwulst 3 und der zweite Dichtwulst 4 sind aus gummielastischem Werkstoff ausgebildet.

Das Trägerteil 1 ist zweiteilig ausgebildet und umfasst ein erstes Teilträgerteil 5 und ein zweites Teilträgerteil 6, die jeweils hülsenförmig ausgebildet und koaxial mit axialem Abstand benachbart zueinander angeordnet sind. Bei der vorliegenden Ausgestaltung sind das erste Teilträgerteil 5 und das zweite Teilträgerteil 6 aus einem spritzgießfähigen Kunststoff, vorliegend Polyamid (PA) ausgebildet.

Das erste Teilträgerteil 5 ist mit dem ersten Dichtwulst 3 und das zweite Teilträgerteil 6 ist mit dem zweiten Dichtwulst 4 verbunden. In dem durch den axialen Abstand von erstem Teilträgerteil 5 und zweitem Teilträgerteil 6 gebildeten Spalt 7 ein gummielastisches Zwischenstück 8 angeordnet, welches die beiden Teilträgerteile 5, 6 elastisch nachgiebig miteinander verbindet.

Das erste Teilträgerteil 5 und das zweite Teilträgerteil 6 sind als Gleichteile ausgebildet, wobei das erste Teilträgerteil 5 und das zweite Teilträgerteil 6 zu einer gedachten Radialebene 9 in axialer Richtung 2 mittig des jeweiligen Teilträgerteils 5, 6 symmetrisch ausgebildet sind. Insofern sind das erste Teilträgerteil 5 und das zweite Teilträgerteil 6 identisch und jeweils spiegelsymmetrisch ausgebildet.

Das erste Teilträgerteil 5 du das zweite Teilträgerteil 6 weisen auf ihren einander axial zugewandten Stirnseiten 10, 11 jeweils sich einen in radialer Richtung 12 nach außen erstreckenden Bund 13, 14 mit einer radialen Höhe 15, 16 auf. Des Weiteren weisen das erste Teilträgerteil 5 und das zweite Teilträgerteil 6 auf ihren einander axial abgewandten Stirnseiten jeweils eine in Umfangsrichtung 19 umlaufende, nutförmige Vertiefung 20, 21 auf, die vom Werkstoff der entsprechenden Dichtwulste 3, 4 ausgefüllt und vom jeweiligen Dichtwulst 3, 4 umschlossen sind.

Die Teilträgerteile 5, 6 und das Zwischenstück 8 sind innenumfangsseitig von einer Schutzschicht 22 gemeinsam und bindenahtfrei überdeckt. Dabei erstreckt sich die Schutzschicht 22 innenumfangsseitig über die gesamte axiale Länge 23 des Steckstücks 27 und bildet die Innenwandung des Steckstücks 27.

Die Schutzschicht 22, der erste Dichtwulst 3, der zweite Dichtwulst 4 und das Zwischenstück 8 sind einstückig ineinander übergehend und materialeinheitlich ausgebildet.

Das Zwischenstück 8 überdeckt den jeweiligen Bund 13, 14 der Teilträgerteile 5, 6 in radialer Richtung vollständig und umfasst eine im Wesentlichen U-förmig ausgebildete Einschnürung 24, die radial nach außen offen ist. Die Einschnürung 24 weist eine radiale Tiefe 26 auf, die der radialen Höhe 15, 16 des jeweils axial angrenzenden Bundes 13, 14 entspricht.

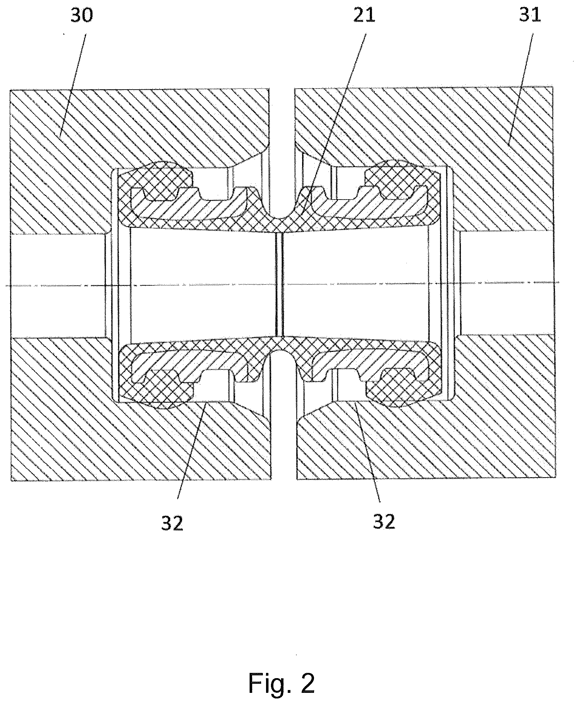

Figur 2 zeigt das Steckstück 27 gemäß Figur 1 montiert in einer Anordnung. Das Steckstück 27 gemäß der vorliegenden Ausgestaltung dient bei dem vorliegenden Ausführungsbeispiel der Verbindung zweier angrenzender Aggregate 30, 31 einer Medienführung einer Batteriekühlung eines elektrisch angetriebenen Fahrzeugs. Die miteinander zu verbindenden Aggregate 30 ,31 weisen dabei Öffnungen 32 auf, in welche das Steckstück 27 eingesteckt wird. Die Dichtwulste 3, 4 des Steckstücks 27 legen sich dabei an jeweils mit radialer Vorspannung dichtend an eine Innenwand der Öffnungen 32 an. Aufgrund der erfindungsgemäßen Ausgestaltung des Steckstücks 27 ist es möglich, dass die Öffnungen 32 der miteinander zu verbindenden Aggregate einen größeren Achsversatz aufweisen und dichtend mit dem Steckstück 27 verbunden werden können, wobei das Steckstück 27 als Medienleitung fungiert. Des Weiteren sind die Aggregate 30, 31 aufgrund der Flexibilität der Einschnürung 24 variabel hinsichtlich des axialen Abstandes.

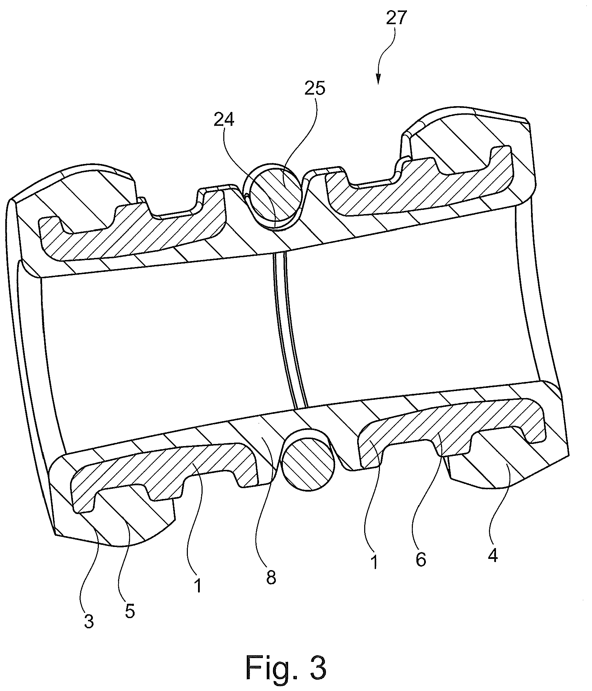

Figur 3 zeigt eine Weiterbildung des in Figur 1 gezeigten Steckstücks 27. Das Steckstück 27 gemäß Figur 3 ist mit einem Stützring 25 ausgerüstet, welcher in der Einschnürung 24 angeordnet ist. Bei der vorliegenden Ausgestaltung ist der Stützring 25 bezogen auf das Zwischenstück 8 separat hergestellt und ungebunden in der Einschnürung 24 angeordnet. Vorliegend ist der Stützring 25 als O-Ring ausgebildet. In alternativen Ausgestaltungen kann der Stützring 25 als Kunststoffring aus zähhartem Kunststoff oder als Ringwendelfeder ausgebildet sein.

## Patentansprüche

1. Steckstück (27), umfassend ein hülsenförmiges Trägerteil (1) aus einem zähharten Werkstoff, das in axialer Richtung (2) an einer ersten Stirnseite (28) einen ersten Dichtwulst (3) und an einer zweiten Stirnseite (29) einen zweiten Dichtwulst (4) aufweist, wobei der erste Dichtwulst (3) und der zweite Dichtwulst (4) aus gummielastischem Werkstoff ausgebildet sind, **dadurch gekennzeichnet, dass** das Trägerteil (1) zweiteilig ausgebildet ist und ein erstes Teilträgerteil (5) und ein zweites Teilträgerteil (6) umfasst, die jeweils hülsenförmig ausgebildet und mit axialem Abstand benachbart zueinander angeordnet sind, dass das erste Teilträgerteil (5) mit dem ersten Dichtwulst (3) und das zweite Teilträgerteil (6) mit dem zweiten Dichtwulst (4) verbunden ist und dass in dem durch den axialen Abstand von erstem Teilträgerteil (5) und zweitem Teilträgerteil (6) gebildeten Spalt (7) ein gummielastisches Zwischenstück (8) angeordnet ist, das die beiden Teilträgerteile (5, 6) elastisch nachgiebig miteinander verbindet, wobei das erste Teilträgerteil (5) und das zweite Teilträgerteil (6) auf ihren einander axial zugewandten Stirnseiten (10, 11) jeweils einen sich in radialer Richtung (12) nach außen erstreckenden Bund (13, 14) mit einer radialen Höhe (15, 16) aufweisen, wobei das Zwischenstück (8) den jeweiligen Bund (13, 14) der Teilträgerteile (5, 6) in radialer Richtung (12) vollständig überdeckt und eine im Wesentlichen U-förmig ausgebildete Einschnürung (24) umfasst, die radial nach außen offen ist, wobei in der Einschnürung (24) ein Stützring (25) angeordnet ist.

2. Steckstück nach Anspruch 1, **dadurch gekennzeichnet, dass** das erste Teilträgerteil (5) und das zweite Trägerteil (6) als Gleichteile ausgebildet sind.

3. Steckstück nach einem der Ansprüche 1 oder 2, **dadurch gekennzeichnet, dass** das erste Teilträgerteil (5) und das zweite Teilträgerteil (6) zu einer gedachten Radialebene (9) in axialer Richtung (2) mittig des jeweiligen Teilträgerteils (5, 6) symmetrisch ausgebildet sind.

4. Steckstück nach einem der Ansprüche 1 bis 3, **dadurch gekennzeichnet, dass** der erste Dichtwulst (3) und der zweite Dichtwulst (4) einstückig ineinander übergehend und materialeinheitlich ausgebildet sind.

5. Steckstück nach einem der Ansprüche 1 bis 4, **dadurch gekennzeichnet, dass** der erste Dichtwulst (3) und/oder der zweite Dichtwulst (4) und das Zwischenstück (8) einstückig ineinander übergehend und materialeinheitlich ausgebildet sind.

6. Steckstück nach einem der Ansprüche 1 bis 5, **dadurch gekennzeichnet, dass** die Teilträgerteile (4, 5) und das Zwischenstück (8) innenumfangseitig von einer Schutzschicht (22) gemeinsam und bindenahtfrei überdeckt sind.

7. Steckstück nach Anspruch 6, **dadurch gekennzeichnet, dass** sich die Schutzschicht (22) innenumfangseitig über die gesamte axiale Länge (23) des Steckstücks (27) erstreckt und die Innenwandung des Steckstücks (27) bildet.

8. Steckstück nach einem der Ansprüche 6 oder 7, **dadurch gekennzeichnet, dass** die Schutzschicht (22), der erste Dichtwulst (3), der zweite Dichtwulst (4) und das Zwischenstück (8) einstückig ineinander übergehend und materialeinheitlich ausgebildet sind.

9. Steckstück nach einem der Ansprüche 1 bis 8, **dadurch gekennzeichnet, dass** der Stützring (25), bezogen auf das Zwischenstück (8), separat hergestellt und ungebunden in der Einschnürung (24) angeordnet ist.

10. Steckstück nach einem der Ansprüche 1 bis 9, **dadurch gekennzeichnet, dass** die Einschnürung (24) eine radiale Tiefe (26) aufweist, die der radialen Höhe (15, 16) des jeweils axial angrenzenden Bundes (13, 14) entspricht.

11. Verwendung eines Steckstücks (27) nach einem der Ansprüche 1 bis 10 in einer Medienführung einer Batteriekühlung eines zumindest teilweise elektrisch angetriebenen Kraftfahrzeugs.

## Claims

1. Plug-in piece (27) comprising a sleeve-shaped support part (1) which is made of a tough material and has in the axial direction (2) a first sealing bead (3) on a first end face (28) and a second sealing bead (4) on a second end face (29), wherein the first sealing bead (3) and the second sealing bead (4) are formed from a rubber-elastic material, **characterized in that** the support part (1) is formed in two parts and comprises a first sub-support part (5) and a second sub-support part (6), each being sleeve-shaped and disposed so as to be mutually adjacent and axially spaced apart, **in that** the first sub-support part (5) is connected to the first sealing bead (3) and the second sub-support part (6) is connected to the second sealing bead (4) and **in that** a rubber-elastic intermediate piece (8) which connects the two sub-support parts (5, 6) to one another in an elastically resilient manner is disposed in the gap (7) formed by the axial spacing of the first sub-support part (5) and the second sub-support part (6), wherein the first sub-support part (5) and the second sub-support part (6) each have on their axially facing end faces (10, 11) a collar (13, 14) which extends outwards in the radial direction (12) and has a radial height (15, 16), wherein the intermediate piece (8) completely covers the respective collar (13, 14) of the sub-support parts (5, 6) in the radial direction (12) and comprises a substantially U-shaped constriction (24) which is open radially towards the outside, wherein a support ring (25) is disposed in the constriction (24).

2. Plug-in piece according to Claim 1, **characterized in that** the first sub-support part (5) and the second support part (6) are formed as identical parts.

3. Plug-in piece according to one of Claims 1 or 2, **characterized in that** the first sub-support part (5) and the second sub-support part (6) are formed in the centre of the respective sub-support part (5, 6) so to be symmetrical in relation to an imaginary radial plane (9) in the axial direction (2).

4. Plug-in piece according to one of Claims 1 to 3, **characterized in that** the first sealing bead (3) and the second sealing bead (4) are formed in one piece so as to transition into one another and are materially integral.

5. Plug-in piece according to one of Claims 1 to 4, **characterized in that** the first sealing bead (3) and/or the second sealing bead (4) and the intermediate piece (8) are formed in one piece so as to transition into one another and are materially integral.

6. Plug-in piece according to one of Claims 1 to 5, **characterized in that** the sub-support parts (4, 5) and the intermediate piece (8) are covered on the internal circumference conjointly and without weld lines by a protective layer (22).

7. Plug-in piece according to Claim 6, **characterized in that** the protective layer (22) extends on the internal circumference over the entire axial length (23) of the plug-in piece (27) and forms the internal wall of the plug-in piece (27).

8. Plug-in piece according to one of Claims 6 or 7, **characterized in that** the protective layer (22), the first sealing bead (3), the second sealing bead (4) and the intermediate piece (8) are formed in one piece so as to transition into one another and are materially integral.

9. Plug-in piece according to one of Claims 1 to 8, **characterized in that** the support ring (25) in terms of the intermediate piece (8) is produced separately and disposed freely in the constriction (24).

10. Plug-in piece according to one of Claims 1 to 9, **characterized in that** the constriction (24) has a radial depth (26) that corresponds to the radial height (15, 16) of the respectively axially adjacent collar (13, 14).

11. Use of a plug-in piece (27) according to one of Claims 1 to 10 in a media routing of a battery cooling unit of an at least partially electrically powered motor vehicle.

## Revendications

1. Pièce enfichable (27), comprenant une partie de support (1) en forme de douille en un matériau dur et tenace, qui présente dans la direction axiale (2) sur un premier côté frontal (28) un premier bourrelet d'étanchéité (3) et sur un deuxième côté frontal (29) un deuxième bourrelet d'étanchéité (4), le premier bourrelet d'étanchéité (3) et le deuxième bourrelet d'étanchéité (4) étant réalisés en un matériau ayant l'élasticité du caoutchouc, **caractérisée en ce que** la partie de support (1) est réalisée en deux parties et comprend une première partie de support partielle (5) et une deuxième partie de support partielle (6), qui sont respectivement réalisées en forme de douille et sont agencées à une distance axiale l'une de l'autre, **en ce que** la première partie de support partielle (5) est reliée au premier bourrelet d'étanchéité (3) et la deuxième partie de support partielle (6) au deuxième bourrelet d'étanchéité (4) et **en ce qu'**une pièce intermédiaire (8) ayant l'élasticité du caoutchouc est agencée dans la fente (7) formée par la distance axiale entre la première partie de support partielle (5) et la deuxième partie de support partielle (6), qui relie les deux parties de support partielles (5, 6) l'une à l'autre de manière élastiquement flexible, la première partie de support partielle (5) et la deuxième partie de support partielle (6) présentant chacune sur leurs côtés frontaux (10, 11) tournés axialement l'un vers l'autre un rebord (13, 14) s'étendant vers l'extérieur dans la direction radiale (12) avec une hauteur radiale (15, 16), la pièce intermédiaire (8) recouvrant complètement le rebord respectif (13, 14) des parties de support partielles (5, 6) dans la direction radiale (12) et comprenant un rétrécissement (24) réalisé essentiellement en forme de U, qui est ouvert radialement vers l'extérieur, une bague d'appui (25) étant agencée dans le rétrécissement (24).

2. Pièce enfichable selon la revendication 1, **caractérisée en ce que** la première partie de support partielle (5) et la deuxième partie de support (6) sont réalisées sous forme de parties identiques.

3. Pièce enfichable selon l'une quelconque des revendications 1 ou 2, **caractérisée en ce que** la première partie de support partielle (5) et la deuxième partie de support partielle (6) sont réalisées symétriquement par rapport à un plan radial imaginaire (9) dans la direction axiale (2) au milieu de la partie de support partielle respective (5, 6).

4. Pièce enfichable selon l'une quelconque des revendications 1 à 3, **caractérisée en ce que** le premier bourrelet d'étanchéité (3) et le deuxième bourrelet d'étanchéité (4) sont réalisés d'un seul tenant, en se fondant l'un dans l'autre, et dans le même matériau.

5. Pièce enfichable selon l'une quelconque des revendications 1 à 4, **caractérisée en ce que** le premier bourrelet d'étanchéité (3) et/ou le deuxième bourrelet d'étanchéité (4) et la pièce intermédiaire (8) sont réalisés d'un seul tenant, en se fondant les uns dans les autres et dans le même matériau.

6. Pièce enfichable selon l'une quelconque des revendications 1 à 5, **caractérisée en ce que** les parties de support partielles (4, 5) et la pièce intermédiaire (8) sont recouvertes, du côté de la périphérie intérieure, par une couche de protection (22) commune et sans joint de liaison.

7. Pièce enfichable selon la revendication 6, **caractérisée en ce que** la couche de protection (22) s'étend du côté de la périphérie intérieure sur toute la longueur axiale (23) de la pièce enfichable (27) et forme la paroi intérieure de la pièce enfichable (27).

8. Pièce enfichable selon l'une quelconque des revendications 6 ou 7, **caractérisée en ce que** la couche de protection (22), le premier bourrelet d'étanchéité (3), le deuxième bourrelet d'étanchéité (4) et la pièce intermédiaire (8) sont réalisés d'un seul tenant, en se fondant les uns dans les autres et dans le même matériau.

9. Pièce enfichable selon l'une quelconque des revendications 1 à 8, **caractérisée en ce que** la bague d'appui (25) est fabriquée séparément par rapport à la pièce intermédiaire (8) et est agencée sans être liée dans le rétrécissement (24).

10. Pièce enfichable selon l'une quelconque des revendications 1 à 9, **caractérisée en ce que** le rétrécissement (24) présente une profondeur radiale (26) correspondant à la hauteur radiale (15, 16) du rebord (13, 14) respectivement adjacent axialement.

11. Utilisation d'une pièce enfichable (27) selon l'une quelconque des revendications 1 à 10 dans un conduit de fluide d'un système de refroidissement de batterie d'un véhicule automobile au moins partiellement à propulsion électrique.
